**Europäisches Patentamt**

**European Patent Office**

**Office européen des brevets**

(11) Veröffentlichungsnummer: **0 249 760 B1**

(12)

# EUROPÄISCHE PATENTSCHRIFT

(45) Veröffentlichungstag der Patentschrift:
**17.10.90**

(51) Int. Cl.⁵: **F23L 15/04, F23D 14/66**

(21) Anmeldenummer: **87107265.8**

(22) Anmeldetag: **19.05.87**

(54) **Rekuperativer Brenner mit Brennersteineinsatz.**

(30) Priorität: **21.05.86 HU 215386**

(43) Veröffentlichungstag der Anmeldung:
**23.12.87 Patentblatt 87/52**

(45) Bekanntmachung des Hinweises auf die Patenterteilung:
**17.10.90 Patentblatt 90/42**

(84) Benannte Vertragsstaaten:
**BE DE FR GB IT SE**

(56) Entgegenhaltungen:
**GB-A- 1 248 912**
**GB-A- 1 260 489**
**GB-A- 1 442 128**
**US-A- 4 401 099**

(73) Patentinhaber: **Tüzeléstechnikal Kutato és Fejlesztö Vállalat, H-3515 Miskolc-Egyetemváros(HU)**

(72) Erfinder: **Maczko, Márton, Dr., Bercsényi u.32, 3434 Mályi(HU)**
Erfinder: **Varga, Sándor, Középszer u. 28, 3529 Miskolc(HU)**

(74) Vertreter: **Patentanwälte Viering & Jentschura, Steinsdorfstrasse 6, D-8000 München 22(DE)**

## Beschreibung

Die Erfindung betrifft einen rekuperativen Impulsbrenner gemäß den einleitenden Teil des Patentanspruchs.

Bei der Modernisierung industrieller Öfen müssen insbesondere zwei wichtige Aufgaben gelöst werden, nämlich die Steigerung des inneren Wärmeaustauschs und die Herabsetzung des wesentlichen Wärmeverlusts, des Abgasverlusts, d.h. die Realisierung der optimalen primären Wärmeausnutzung.

Die Impulsbrenner sind wichtige Mittel zur Erhöhung des Wärmeaustauschs innerhalb des Arbeitsraums. Bei diesen Brennern wird durch die hohe Austrittsgeschwindigkeit des Brennprodukts (100 bis 200 m/s) die Erhitzung des Einsatzes durch die erhöhte konvektive Wärmeübergabe beschleunigt.

Zur primären Wärmeausnutzung werden Rekuperatoren verschieder Typen verwendet; der früheren Praxis gemäß wurde je Ofen ein gemeinsamer Rekuperator eingesetzt; neuerdings wird jedem Brenner ein Rekuperator zugeordnet, damit die Wärme des austretenden Abgases unmittelbar ausgenutzt werden kann.

Aus der technischen Fachliteratur und aus der Praxis sind verschiedene Impulsbrenner bekannt. Von diesen Brennern haben sich diejenigen verbreitet, deren Geräuschpegel auch bei einer hohen Austrittsgeschwindigkeit des Brennprodukts (200 m/s) den Geräuschpegel der traditionellen Brenner nicht überschreitet. Diese Forderung kann nur mit Impulsbrennern solcher Konstruktion befriedigt werden, bei welcher in dem Brennerstein (Brennraum) die Bedingungen der kontinuierlichen Vermischung und Verbrennung gewährleistet sind.

Die Wärmeausnutzung der austretenden Abgase je Brenner wird mit den rekuperativen (mit Rekuperatoren versehenen) Brennern realisiert. Aufgrund der wichtigsten Charakteristiken können die bisher bekannten rekuperativen Brenner in folgende Gruppen aufgeteilt werden:

Zu der ersten Gruppe gehören diejenigen Brenner, bei denen der Brennraum mit der vorzuwärmenden Brennluft gekühlt wird, mit anderen Worten, bei denen die Luftvorerwärmung nicht ausschließlich durch die Wärmeausnutzung der aus dem Arbeitsraum des Ofens austretenden Abgase stattfindet, sondern durch die Kühlung der aus dem Brenner austretenden Brennprodukte. In diesem Fall ist die aufgrund der Luftvorwärmung berechenbare Energiesparnis nur scheinbar vorhanden, da die infolge der Kühlung des Brennraums reduzierte Temperatur des austretenden Brennprodukts einen den meßbaren Wert weit unterschreitenden Lufttemperatur entspricht. Durch die Kühlung des Brennraums wird die durch die Vorwärmung der Luft und höhere Temperatur des Brennprodukts zu beschleunigen gewünschte Wärmeübergabe in dem Ofen beeinträchtigt.

Zu dieser Gruppe gehört der in der GB-A-1 258 950 beschriebene Brenner. Die Brennluft strömt in dem den Brennraum umschließenden Mantel, wobei die Kühlwirkung in bedeutendem Maße zur Geltung kommt. Außerdem sind die Geschwindigkeit des austretenden Brennprodukts und damit der Impuls zur Erhöhung der Wärmeübergabe innerhalb des Arbeitsraums nicht ausreichend.

Zu dieser Kategorie kann auch der Brenner nach der US-A-4 255 122 zugeordnet werden. Der mit einem Kreisringprofil ausgestaltete, den Brennraum umschließende Luftgang kühlt unmittelbar den Brennraum; gleichzeitig wird auch das Brennprodukt mit der Luft abgekühlt, die durch ein in den Feuerraum hineinragendes Rohr strömt.

In unserem Forschungs- und Entwicklungsunternehmen der Feuerungstechnik wurde ein rekuperativer Gasbrenner des Typs RQ mit erhöhtem Impuls entwickelt; auch bei diesem kommt die von der vorzuwärmenden Luft auf den Brennraum ausgeübte Kühlwirkung zur Geltung. Der Unterschied gegenüber den bekannten Lösungen besteht darin, daß die Luftzuführbohrungen - die mit den Tangenten an die Verteilerscheibe einen Winkel von 40 bis 60° einschliessen - in dem Brennraum das Brennen bzw. die Beendigung des Brennprozesses so beeinflussen, daß eine erhöhte Impulsgeschwindigkeit (20-80 m/s) erreicht werden kann.

Zu der zweiten Gruppe gehören diejenigen Brenner, bei denen zwar der Brennraum nicht gekühlt ist, der aber als eine Verlängerung des Brennersteins des Brenners an dem Rekuperator angeschlossen ist, wodurch sich eine bedeutende Dimensionszunahme ergibt.

Einen derartigen Brenner beschreibt die GB-A-1 260 489. Die in dem ein Kreisringprofil aufweisenden Raum und im Gegenstrom zu dem Abgas strömende Luft vermischt sich mit dem Gas im Brennerstein, wo auch der Brennvorgang abläuft.

Die bekannten Lösungen weisen zahlreiche Nachteile auf. So z.B. sind bei keiner der Lösungen die wirksame Wärmeausnutzung (infolge der Kühlung des Brennraumes), sowie die zur Erhöhung der Wärmeaustauschs im Ofen unerläßliche Brennproduktgeschwindigkeit, Impulse, gleichzeitig vorhanden (was auf das unbefriedigende Maß des Ausbrennens im Brennraum, Luftdrall, Mangel an geeigneter Vermischung, auf die offenen Brennersteine der traditionellen Brenner zurückgeführt werden kann); ein weiterer Nachteil besteht in den kleinen strukturellen Abmessungen, die für die zeitgemäßen Brenner kennzeichnend sind (infolge des an die herkömmlichen Brenner angeschlossenen Rekuperators und bei den rekuperativen Impulsbrennern infolge des als Ansatz eingebauten Brennersteins). Desweiteren fehlt bei den bekannten rekuperativen Impulsbrennern die Lösung, die bei einem ungekühlten Brennraum und bei einer starken Luftvorerwärmung (auf 550 bis 600 C°) die Ausscheidung von $NO_x$ verhindert.

Ein weiterer Nachteil der bekannten Lösungen besteht darin, daß zu jedem einzelnen Leistungswert ein separater Brenner mit entsprechender struktureller Gestaltung gehört, wodurch einerseits die Vereinfachung der Serienproduktion unmöglich ist, andererseits keine Möglichkeit zur flexiblen Anpassung an die Temperatur des Arbeitsraums des Ofens besteht.

Durch die Erfindung wird die Aufgabe gelöst, einen rekuperativen Impulsbrenner mit kurzer Baulänge und mit einem Brennersteineinsatz zu entwickeln und so auszubilden, daß er bei einheitlicher Gestaltung des Gehäuses die Ausführung von Brennern mit unterschiedlichen Leistungen, die Anwendung eines Rekuperators mit den technischen Parametern entsprechenden Abmessungen und im Bedarfsfall einen schnellen Austausch ermöglicht.

Dies wird gemäß der Erfindung durch die Merkmale gemäß dem Patentanspruch erreicht. Der Impulsbrenner weist somit einen an dem hinteren Ende des Brennersteineinsatzes angeordneten Sammler für die Warmluft und einen den Warmluftspeicher begrenzende luftverteilende Kammer auf; vor der luftverteilenden Kammer – diese umschließend – ist ein Abgassammler angeordnet; an dem den Abgassammler zugewandten Teil der luftverteilenden Kammer ist eine ergänzende Wärmeaustauschfläche vorgesehen, an die ein innen und außen geripptes Rekuperatorelement mit lösbarem Bund, vorteilhaft mit einem Gewinde, angeschlossen ist, das sich einer den Brennereinsatz umgebenden Blechbekleidung mit einer Dilationsmöglichkeit anpaßt; desweiteren ist ein an die luftverteilende Kammer mit lösbarem Bund, vorteilhaft mit Gewinde angeschlossenes, rings der Blechbekleidung konzentrisch angeordnetes, sich im Inneren des innen und außen gerripptes Elements befindendes, außen gerripptes Element vorgesehen.

Die Erfindung wird anhand eines vorteilhaften Ausführungsbeispiels mit Hilfe der Zeichnung näher erläutert. In der Zeichnung zeigen:

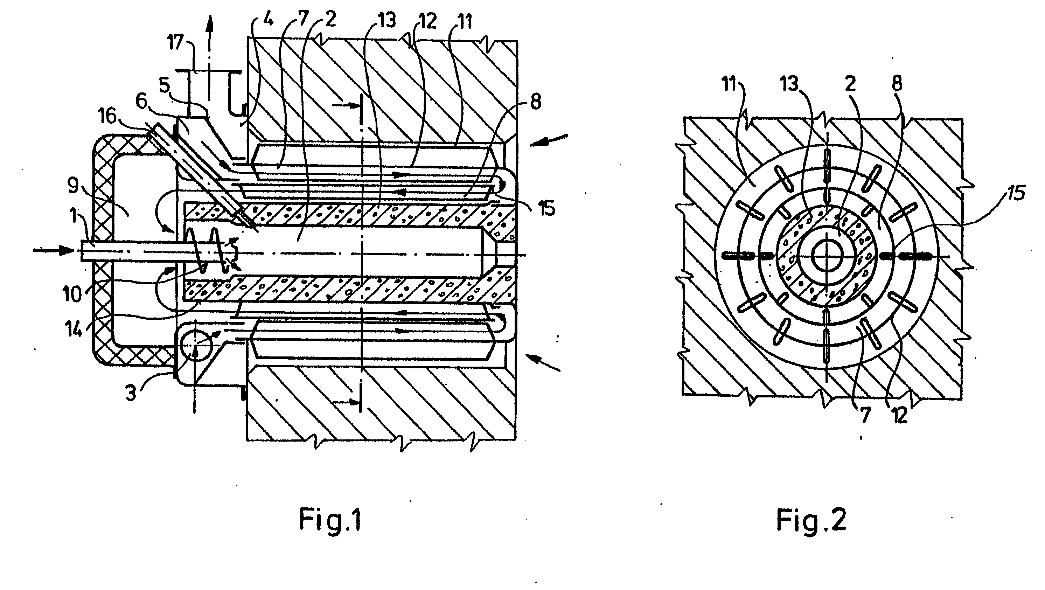

Figur 1 den Querschnitt des rekuperativen Impulsbrenners mit dem Brennersteineinsatz, und
Figur 2 den Querschnitt des Brennersteineinsatzes, der Abgas- und Luftgänge.

Erdgas gelangt über radiale Bohrungen einer Gasdüse 1 in den Brennraum 2. Kaltluft gelangt über einen Luftzufuhrstutzen 3, einen Abgassammler 4 sowie eine ergänzende Wärmeaustauschfläche 5 und über eine im Wärmeaustausch stehende luftverteilende Kammer 6 zu einem Gegenstromluftgang 7, wonach sie sich umkehrend in einen Gleichstromluftgang 8 gelangt. Die in dieser Weise vorgewärmte Luft gelangt in einen isolierten Warmluftsammler 9 und strömt durch eine Luftdralleinheit 10 in den Brennraum.

Der Gegenstromluftgang 7 und ein Abgasgang 11 werden von einem an die luftverteilende Kammer 6 mit lösbarem Bund, z.B. mit einem Gewinde angeschlossenen, aus wärmebeständigem Gußmaterial gefertigten, außen und innen gerippten Rekuperatorelement 12 voneinander getrennt, das mit seinem gewölbten Ende an eine wärmebeständige Blechbekleidung 14 des Brennersteineinsatzes 13 angepaßt ist. Der Gegenstromluftgang 7 und der Gleichstromluftgang 8 sind voneinander von einem an den Warmluftsammler 9 mit lösbarem Bund, z.B. mit einem Gewinde, angeschlossenen, aus wärmebeständigem Gußmaterial gefertigen, innen gerippten Rekuperatorelement 15 getrennt, das zwischen das außen und innen gerippte Rekuperatorelement 12 und die Blechbekleidung 14 des Brennersteineinsatzes eingefügt ist. Der Brennersteineinsatz 13 erstreckt sich in der vollen Länge des außen und innen gerippten Rekuperatorelementes' 12 und des innengerippten Rekuperatorelements 15.

Das Verbrennen des durch die radialen Bohrungen der Gasdüse zugeführten Gases beginnt beim Anschließen des Zündungs- und Flammenwächters 16 in dem von der Luftdralleinheit 10 erzeugten zylindermantelartigen Luftstrom, dem Prinzip der kontinuierlichen Vermischungs-Verbrennung entsprechend; als Ergebnis des am Ende des Brennraums 2 beendeten Brennvorganges tritt das Brennprodukt mit hoher Geschwindigkeit in den Arbeitsraum des Ofens aus. Das den Ofen verlassende Abgas stömt durch den Abgasgang 11 und gibt die Wärme durch Strahlung und Konvektion an das außen und innen gerippte Rekuperatorelement 12 ab. Das innen und außen gerippte Rekuperatorelement 12 strahlt einen Teil der Abgaswärme auf das innengerippte Rekuperatorelement 15. Das Abgas - nachdem es in dem Abgassammler 4 die ergänzende Wärmeaustauschfläche 5 durch Strahlung und Konvektion erhitzt hatte - tritt durch einen zweckmäßig mit Ejektor versehen Abgasaustritt 17 in das abgasableitende System des Ofens aus. Das Brennergehäuse wird durch den zweckmäßig isolierten Warmluftsammler 9, die luftverteilende Kammer 6, den vor der Kammer angeordneten und diese unschließenden Abgassammler 4 gebildet, wodurch eine kurze strukturelle Länge ermöglicht wird.

Die sich aus der Anwendung der Erfindung ergebenden Vorteile sind wie folgt:

Durch die zweckdienlich ausgestaltete Konstruktion werden die maximalen Vorteile bei dem Brenner vereinigt, die durch den mit hoher Geschwindigkeit arbeitenden Impulsbrenner, die dadurch gesicherte erhöhte Wärmeübergabe und die Wärmeausnutzung der austretenden Abgase erreicht werden können. Neben den wesentlichen reduzierten Abmessungen (etwa durchschnittlich 40%) ermöglichen die einheitliche Gehäuseausgestaltung und die Anwendung des Rekuperators mit den sich anpassenden Abmessungen einerseits die Gestaltung eines Brenners mit mehreren Leistungsstufen und die optimale Wärmeausnutzung auch bei sich ändernden technischen Parametern (abfallende Temperatur im Arbeitsraum des Ofens).

## Patentansprüche

Rekuperativer Impulsbrenner mit Organen zur Gas- und Luftzufuhr und zur Zündung, der einen am hinteren Ende eines Brennersteineinsatzes (13) angeordneten Warmluftsammler (9) und eine diesen umgebende luftverteilende Kammer (6) aufweist, wobei vor dieser Kammer ein Abgassammler (4) und zwischen beiden eine Wärmetauscherfläche (5) vorgesehen sind, dadurch gekennzeichnet, daß der Brennersteineinsatz (13) von einer Blechbekleidung (14) umgeben ist und daß konzentrisch um den Brennersteineinsatz (13) von innen nach außen ein innen gerripptes und dann ein innen und außen gerripptes Rekuperatorelement (12, 15) lösbar angeordnet sind.

## Claims

Recuperative impluse burner with organs for the gas and air supply and for the ignition, which is provided with an hot air collector (9) arranged at the back end of a burner stone insert (13) and with an air-distributing chamber (6) surrounding the same, wherein an exhaust gas collector (4) is provided in front of that chamber and between the two a heat exchange surface (5) is provided, characterized in that the burner stone insert (13) is surrounded by a sheet metal jacket (14) and that concentrically around the burner stone insert (13) from inside toward outside an inside ribbed and then an inside and outside ribbed recuperator element (12, 15) are aranged in a releasable manner.

## Revendications

Brûleur récupérateur à impulsion, comportant des organes d'amenée de gaz et d'air et d'allumage et comprenant, à l'extrémité arrière d'une garniture de combustion céramique (13), un collecteur d'air chaud (9) ainsi qu'une chambre de distribution d'air (6) entourant celui-ci, cependant qu'il est prévu, en amont de ladite chambre, un collecteur de fumées (4) et, entre les deux, une surface d'échange de chaleur (5), caractérisé en ce que la garniture de combustion céramique (13) est entourée d'un revêtement en tôle (14) et en ce qu'un élément récupérateur nervuré intérieurement et extérieurement (12) et un élément récupérateur nervuré intérieurement (15) sont disposés de manière amovible et concentriquement autour de la garniture de combustion céramique (13).

Fig.1

Fig.2